# EUROPEAN PATENT APPLICATION

(11) **EP 4 737 151 A1**
(43) Date of publication of application: **06.05.2026**
(21) Application number: 24831400.7
(22) Date of filing: 01.05.2024
(51) Int. Cl.: B60K 1/00

(54) **WORK VEHICLE**

(30) Priority: 30.06.2023 JP 2023107676
(71) Applicant: Kubota Corporation, Osaka 556-8601 (JP)
(72) Inventor: MINAMIDE, Yuki, Sakai-shi, Osaka 590-0908 (JP); OHNISHI, Teppei, Sakai-shi, Osaka 590-0908 (JP)
(74) Representative: Cabinet Beau de Loménie
(86) International application number: PCT/JP2024/016785
(87) International publication number: WO 2025/004527

(57) **Abstract**

The present disclosure relates to a work vehicle. A work vehicle according to the present disclosure includes: an electric motor including an annular flange on a side surface on a first side in an axial direction; a vehicle body including an annular plate to which the electric motor is fixed; and an extension member that connects the flange and the plate, the extension member includes: a cylindrical boss portion; and a flange portion extending radially outward from an axial end of the boss portion, the plate is disposed on a first side of the flange in the axial direction, the boss portion is fixed to the flange by a first bolt inserted into a through hole formed in the plate from a first side in the axial direction and fastened to the flange from the first side in the axial direction, and the flange portion is fixed to the plate by a second bolt disposed on the first side of the plate in the axial direction and fastened to the plate from the first side in the axial direction.

## Description

### TECHNICAL FIELD

The present disclosure relates to a work vehicle.

### BACKGROUND ART

Conventionally, a work vehicle including an electric motor and a battery is known (see Patent Literature 1). In a work vehicle disclosed in Patent Literature 1, a battery is disposed inside a hood. The work vehicle disclosed in Patent Literature 1 is a tractor.

### CITATION LIST

### [PATENT LITERATURE]

PATENT LITERATURE 1: Japanese Laid-Open Patent Publication No. 2022-060655

### SUMMARY OF THE INVENTION

A work vehicle according to an aspect of the present disclosure includes: an electric motor including an annular flange on a side surface on a first side in an axial direction; and a vehicle body including an annular plate to which the electric motor is fixed, the work vehicle further includes an extension member that connects the flange and the plate, the extension member includes: a cylindrical boss portion; and a flange portion extending radially outward from an axial end of the boss portion, the plate is disposed on a first side of the flange in the axial direction, the boss portion is fixed to the flange by a first bolt inserted into a through hole formed in the plate from a first side in the axial direction and fastened to the flange from the first side in the axial direction, and the flange portion is fixed to the plate by a second bolt disposed on the first side of the plate in the axial direction and fastened to the plate from the first side in the axial direction.

The present disclosure can suppress distortion generated in an electric motor when the electric motor is fixed to a chassis in a work vehicle including the electric motor.

### BRIEF DESCRIPTION OF DRAWINGS

[FIG. 1] FIG. 1 is a perspective view illustrating an embodiment of a work vehicle of the present disclosure.
[FIG. 2] FIG. 2 is a front view illustrating the embodiment of the work vehicle of the present disclosure.
[FIG. 3] FIG. 3 is a rear view illustrating the embodiment of the work vehicle of the present disclosure.
[FIG. 4] FIG. 4 is a right side view illustrating the embodiment of the work vehicle of the present disclosure.
[FIG. 5] FIG. 5 is a left side view illustrating the embodiment of the work vehicle of the present disclosure.
[FIG. 6] FIG. 6 is a plan view illustrating the embodiment of the work vehicle of the present disclosure.
[FIG. 7] FIG. 7 is a bottom view illustrating the embodiment of the work vehicle of the present disclosure.
[FIG. 8] FIG. 8 is an exploded perspective view of a part of the work vehicle of the present disclosure.
[FIG. 9] FIG. 9 is a left side view of the work vehicle in a state in which some parts are removed.
[FIG. 10] FIG. 10 is a perspective view illustrating an installed state of a motor in a chassis.
[FIG. 11] FIG. 11 is an overall perspective view illustrating a state in which the motor is fixed to a plate.
[FIG. 12] FIG. 12 is an exploded perspective view illustrating a state in which the motor is fixed to the plate.
[FIG. 13] FIG. 13 is a cross-sectional view illustrating a state in which the motor is fixed to the plate.
[FIG. 14] FIG. 14 is a perspective view illustrating an extension member as viewed from a boss portion side.

### DETAILED DESCRIPTION

### <Problems to be Solved by the Invention>

In recent years, a work vehicle that generates power using hydrogen as a fuel using a fuel cell module and drives an electric motor with the electric power to travel has been studied. In such a work vehicle, an electric motor installed on a vehicle body is fixed to a chassis included in the vehicle body. However, when the flatness of the mounting surface of the electric motor in the chassis is insufficient, distortion may be generated in the electric motor fixed to the mounting surface.

An object of the present disclosure is to suppress distortion generated in an electric motor fixed to a chassis in a work vehicle including the electric motor.

### <Effects of the Invention>

According to the work vehicle of the present disclosure, in the work vehicle including the electric motor, it is possible to suppress distortion generated in the electric motor when the electric motor is fixed to the chassis.

### <Outline of Embodiment of Present Disclosure>

Hereinafter, an outline of an embodiment of the present disclosure will be listed and described.
(1) A work vehicle according to the present embodiment includes: an electric motor including an annular flange on a side surface on a first side in an axial direction; and a vehicle body including an annular plate to which the electric motor is fixed, and the work vehicle further includes an extension member that connects the flange and the plate. The extension member includes a cylindrical boss portion and a flange portion extending radially outward from an axial end of the boss portion. The plate is disposed on a first side of the flange in the axial direction. The boss portion is fixed to the flange by a first bolt inserted into a through hole formed in the plate from a first side in the axial direction and fastened to the flange from the first side in the axial direction. The flange portion is fixed to the plate by a second bolt disposed on the first side of the plate in the axial direction and fastened to the plate from the first side in the axial direction.

According to the work vehicle of the present embodiment, in the work vehicle including the electric motor, it is possible to suppress distortion generated in the electric motor when the electric motor is fixed to the chassis.

(2) In the work vehicle according to the present embodiment, it is preferable that the flange includes an annular protruding portion protruding from a radially inner side to a first side in the axial direction, and the boss portion be fixed to the protruding portion inserted into the through hole from a second side in the axial direction. According to the work vehicle having such a configuration, the boss portion extends the protruding portion, and the boss portion, the protruding portion, and the through hole can form a spigot joint structure. This makes it possible to improve the positioning accuracy of the motor with respect to the plate. As a result, distortion generated in the motor fixed to the plate can be suppressed.

(3) In the work vehicle according to the present embodiment, it is preferable that the extension member includes: a first bolt hole through which the first bolt is inserted; and a second bolt hole through which the second bolt is inserted, and the first bolt hole be formed at a position radially inner than the second bolt hole. According to the work vehicle having such a configuration, axial displacement of the electric motor and the extension member can be suppressed. As a result, distortion generated in the electric motor fixed to the plate can be suppressed.

(4) In the work vehicle according to the present embodiment, it is preferable that in the extension member, an outer diameter of the flange portion be larger than an outer diameter of the flange. According to the work vehicle having such a configuration, axial displacement of the plate and the extension member can be suppressed. As a result, distortion generated in the electric motor fixed to the plate can be suppressed.

(5) It is preferable that the work vehicle according to the present embodiment further includes: a fuel cell module installed on the vehicle body; and a hydrogen pipe and a hydrogen tank that supply hydrogen to the fuel cell module. According to the work vehicle having such a configuration, in the work vehicle including the electric motor driven by electric power generated by the fuel cell module, distortion generated in the electric motor fixed to the plate can be suppressed.

### <Details of Embodiment of Invention of Present Disclosure>

Hereinafter, the embodiment of the present disclosure will be described in detail with reference to the drawings. Note that at least a part of the embodiment described below may be arbitrarily combined.

### [Overall Configuration of Work Vehicle]

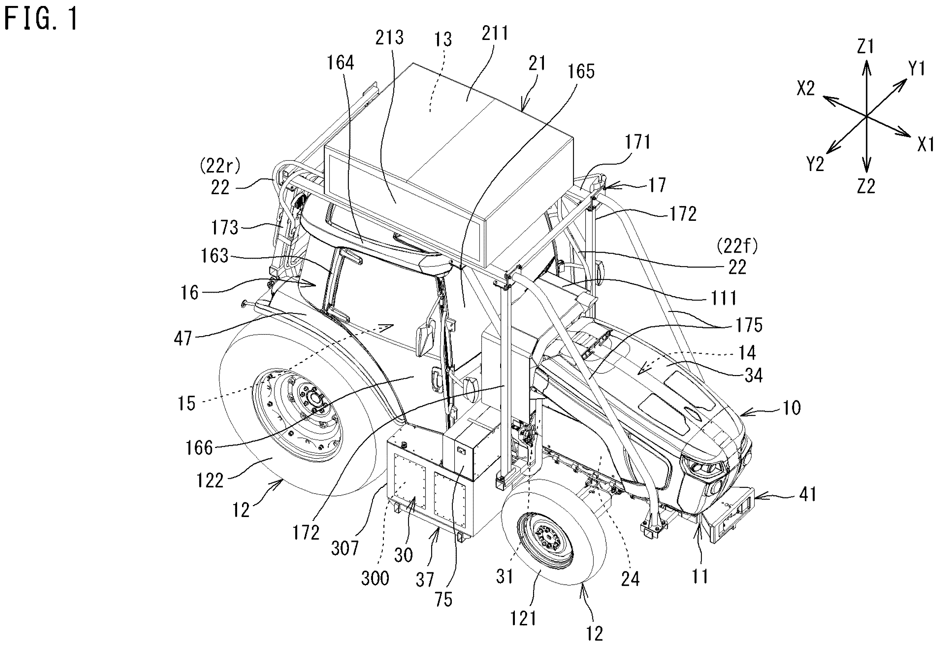

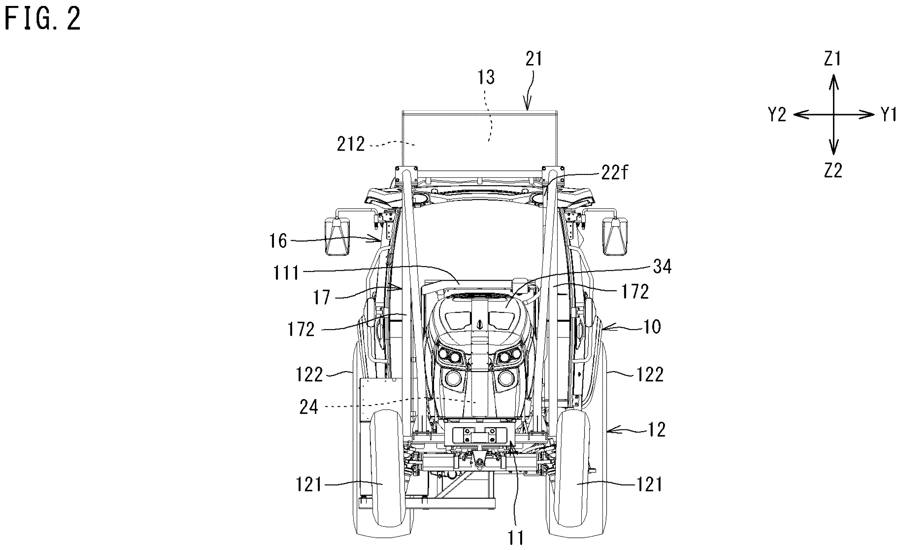

FIG. 1 is a perspective view illustrating an embodiment of a work vehicle of the present disclosure. FIG. 2 to FIG. 7 are a front view, a rear view, a side view (left side view), a side view (right side view), a plan view, and a bottom view of the work vehicle illustrated in FIG. 1.

The work vehicle 10 of the present embodiment is a vehicle that can be used for farmwork, and the work vehicle 10 illustrated in FIG. 1 is a tractor. The work vehicle is not limited to a tractor. For example, the work vehicle according to the present invention may be an agricultural machine other than a tractor, a construction machine, a utility vehicle, or the like.

Directions of the work vehicle 10 of the present disclosure are defined. A direction in which the work vehicle 10 moves forward is defined as front, a direction in which the work vehicle 10 moves rearward is defined as rear, a left side of the work vehicle 10 facing forward is defined as left, and a right side of the work vehicle 10 facing forward is defined as right. A left-right direction orthogonal to the front-rear direction is defined as a vehicle-width direction. A direction orthogonal to both the front-rear direction and the vehicle-width direction (left-right direction) is defined as a vertical direction. The vertical direction is also referred to as a height direction.

In each figure, an orthogonal three-dimensional coordinate system is illustrated, and the front direction is indicated by an arrow X1 and the rear direction is indicated by an arrow X2. The left direction is indicated by an arrow Y1, and the right direction is indicated by an arrow Y2. The upward direction is indicated by an arrow Z1, and the downward direction is indicated by an arrow Z2.

The work vehicle 10 illustrated in FIG. 1 includes a vehicle body 11, a traveling device 12 that supports the vehicle body 11 in a travelable manner, a driver's seat 15, a cabin 16, a tank unit 21 including a tank 13 that stores fuel, and a drive device 14 that is driven by the fuel stored in the tank 13. The fuel is hydrogen, and the tank 13 is a hydrogen tank that stores hydrogen gas. The work vehicle 10 according to the present embodiment is a fuel cell vehicle (FCV) that travels using electric power generated by a fuel cell (fuel cell module) 24 using hydrogen and oxygen.

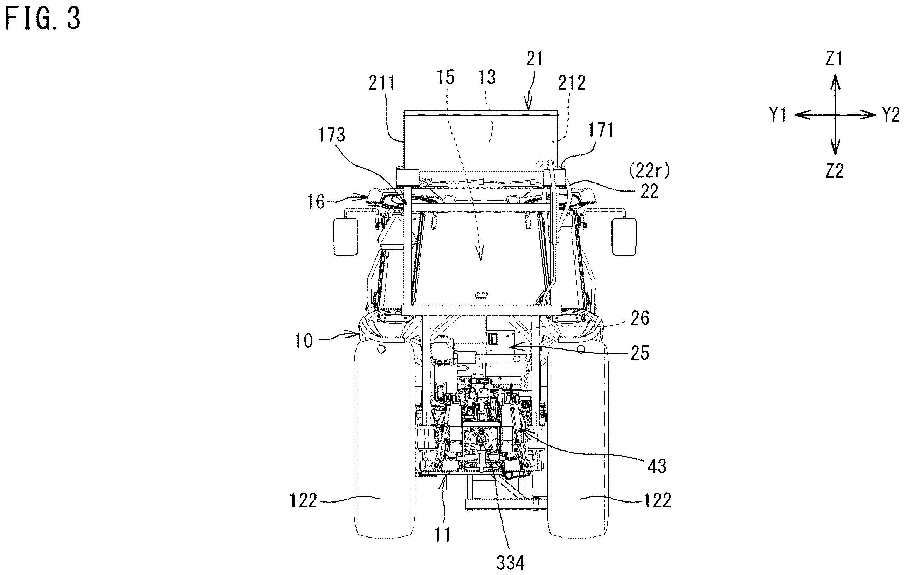

The work vehicle 10 includes the fuel cell 24, a battery unit 30, and an electric motor 31 as the drive device 14. The battery unit 30 includes a battery 300 that stores electric power generated by the fuel cell 24, and supplies the stored electric power to the motor 31. The work vehicle 10 includes pipes (hydrogen pipes) 22 for hydrogen gas and a filling unit 25 (see FIG. 3). The filling unit 25 has a filling port (receptacle) 26 to which a filling nozzle of a hydrogen gas supply machine (not illustrated) separate from the work vehicle 10 is connected. Hydrogen gas is supplied from the filling port 26 and is supplied to the tank 13 through the pipe 22 (rear pipe 22r). Hydrogen gas in the tank 13 is supplied to the fuel cell 24 through a pipe 22 (front pipe 22f). Specific configurations of the filling unit 25 and the pipes 22 will be described below.

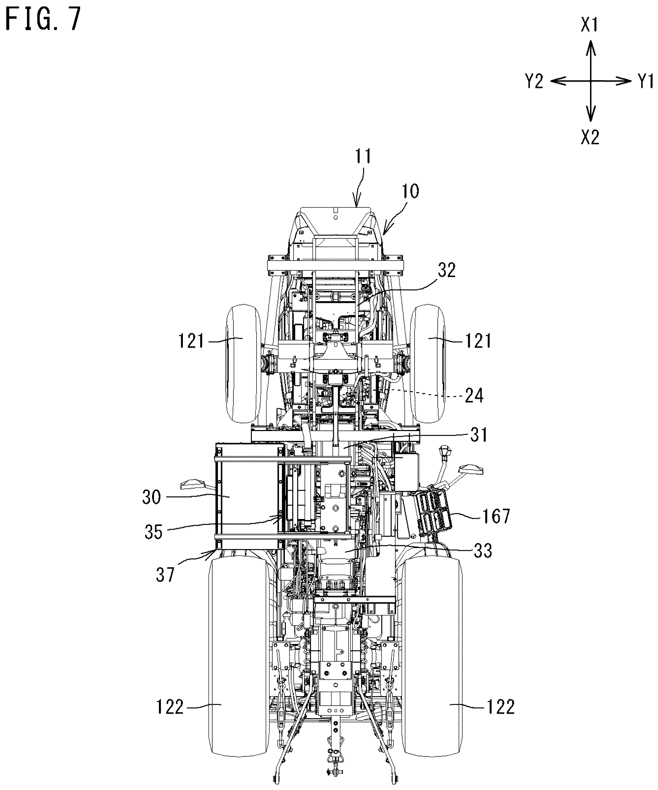

The work vehicle 10 (see FIG. 1) includes an installation frame 17 and a support structure 37. The installation frame 17 is a frame for installing the tank unit 21 (tank 13) on the vehicle body 11. The support structure 37 is a component for supporting the battery unit 30 on the vehicle body 11. The work vehicle 10 (see FIG. 7) has a discharge path 35. The discharge path 35 discharges water or water vapor generated by the operation of the fuel cell 24 to the outside. Specific configurations of the installation frame 17, the support structure 37, and the discharge path 35 will be described below.

### [Vehicle Body 11]

The vehicle body 11 includes a chassis 41, a hood 34, a cover 111, and fenders 47 that cover rear wheels 122 from above.

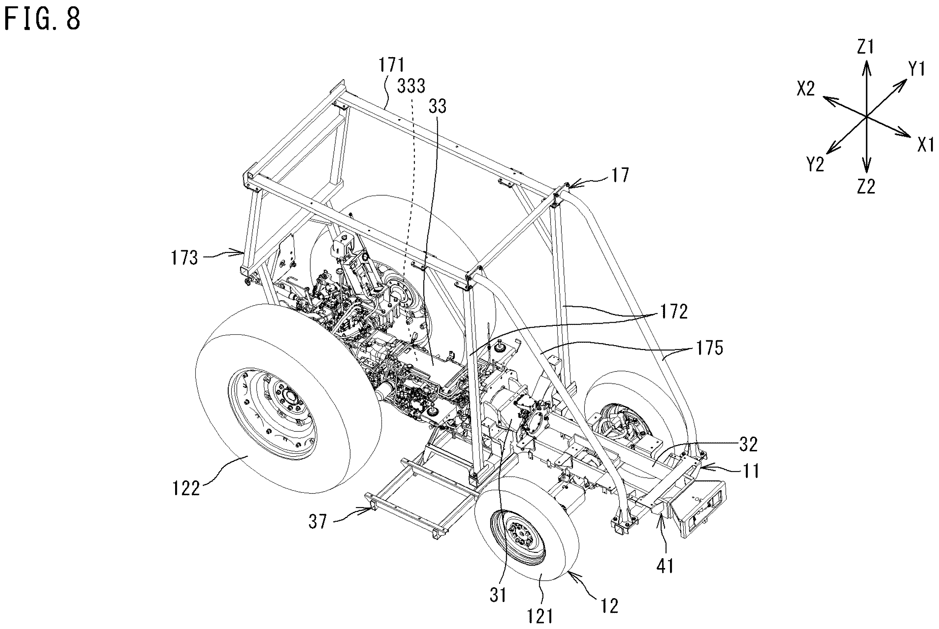

The chassis 41 supports the traveling device 12, the drive device 14, and the cabin 16. FIG. 8 is an exploded perspective view of a part of the work vehicle 10 illustrated in FIG. 1. The chassis 41 is located at the center in the vehicle-width direction and has a long shape in the vehicle front-rear direction. The chassis 41 includes a front frame 32 serving as a front portion of the chassis 41, and a gear case 33 serving as a rear portion of the chassis 41. The front frame 32 is formed by combining metal frame members and the like. The gear case 33 includes a metal box. The gear case 33 is coupled to the rear portion of the front frame 32, and the gear case 33 and the front frame 32 form the frame of the vehicle body 11.

The motor 31 is installed on the front frame 32. The gear case 33 includes a power transmission mechanism 333 such as a transmission, a clutch, and a differential gear therein. The power transmission mechanism 333 decelerates or accelerates the rotation of the output shaft of the motor 31, and outputs the rotation to the traveling device 12 (one or both of front wheels 121 and rear wheels 122).

The power transmission mechanism 333 outputs a part of the power of the motor 31 to a PTO shaft 334 (see FIG. 3). The PTO shaft 334 is an output shaft provided at a rear portion of the gear case 33. The work vehicle 10 includes a coupling device 43 for coupling a separate instrument at the rear of the vehicle body 11. The PTO shaft 334 transmits power of the motor 31 to the separate instrument coupled to the coupling device 43. The separate instrument is a working device (not illustrated), and is also called an implement. The working device is operated by power of the motor 31. The working device is, for example, a cultivator or the like.

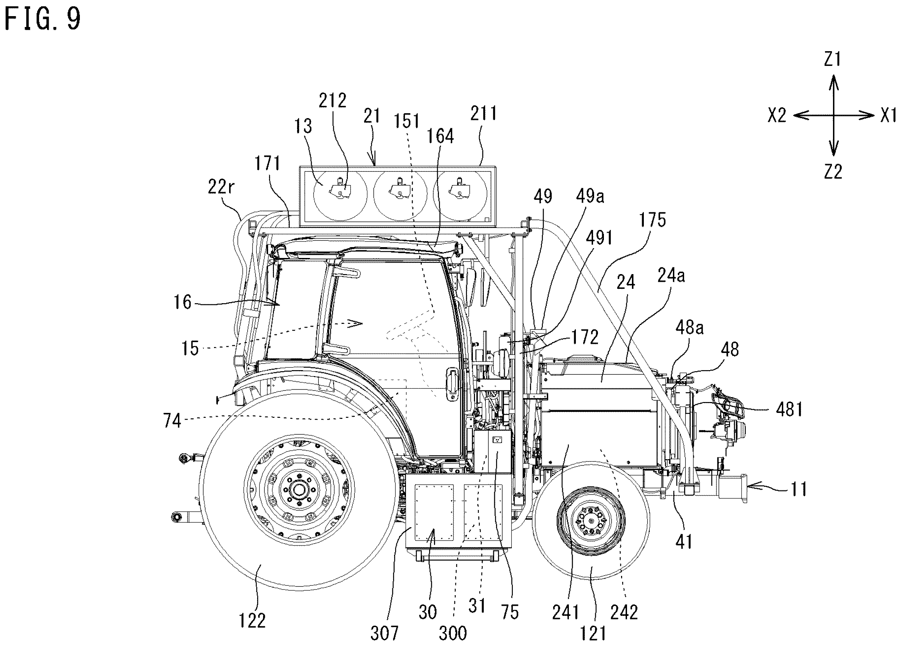

FIG. 9 is a left side view of the work vehicle 10 in a state in which the hood 34, the cover 111, and a part of a tank case 211 of the tank unit 21 are removed. A first radiator 48, the fuel cell 24, and a second radiator 49 are installed on the chassis 41 in this order from the front of the vehicle.

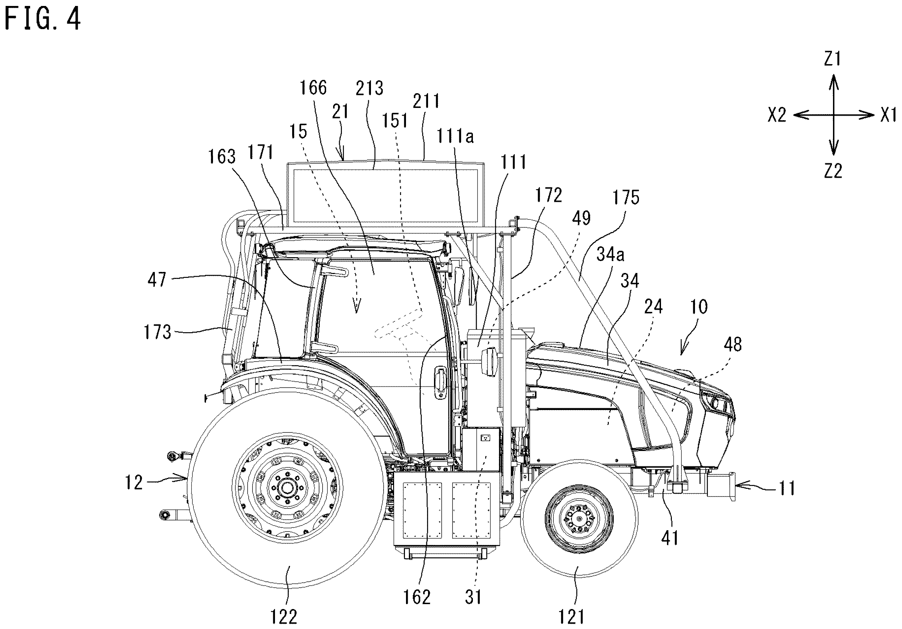

As illustrated in FIG. 4 and FIG. 9, the hood 34 and the cover 111 cover installed components positioned close to the front of the vehicle body 11. The hood 34 covers the fuel cell 24 and the first radiator 48 from above and from both sides in the vehicle-width direction. The cover 111 covers the second radiator 49 positioned at the rear of the fuel cell 24 from above and from both sides in the vehicle-width direction.

An upper surface 48a of the first radiator 48 is lower than an upper surface 24a of the fuel cell 24. The upper surface 24a of the fuel cell 24 is lower than an upper surface 49a of the second radiator 49.

An upper surface 111a of the cover 111 is higher than an upper surface 34a of the hood 34, but is lower than the upper end of a steering wheel 151 operated for steering by an operator sitting on the driver's seat 15. The upper surface 34a of the hood 34 is lower toward the front. Therefore, the field of view of the operator sitting on the driver's seat 15 is less likely to be obstructed.

### [Driver's Seat 15 and Cabin 16]

The driver's seat 15 and the cabin 16 are provided on the chassis 41 at positions close to the rear (see FIG. 1). The cabin 16 includes a driver's seat 15 therein.

The cabin 16 includes front pillars 162 positioned in front of the driver's seat 15, rear pillars 163 positioned at the rear of the driver's seat 15, and a roof 164 positioned above the driver's seat 15. The front pillars 162 are provided on a left front side and a right front side of the driver's seat 15. The rear pillars 163 are provided at the left rear and the right rear of the driver's seat 15. The roof 164 is supported by the front pillars 162 and the rear pillars 163.

The cabin 16 has a windshield 165 positioned in front of the driver's seat 15. The windshield 165 is provided between the left and right front pillars 162. The cabin 16 has openable and closable doors 166 on both sides in the vehicle-width direction. The doors 166 are provided between the front pillars 162 and the rear pillars 163.

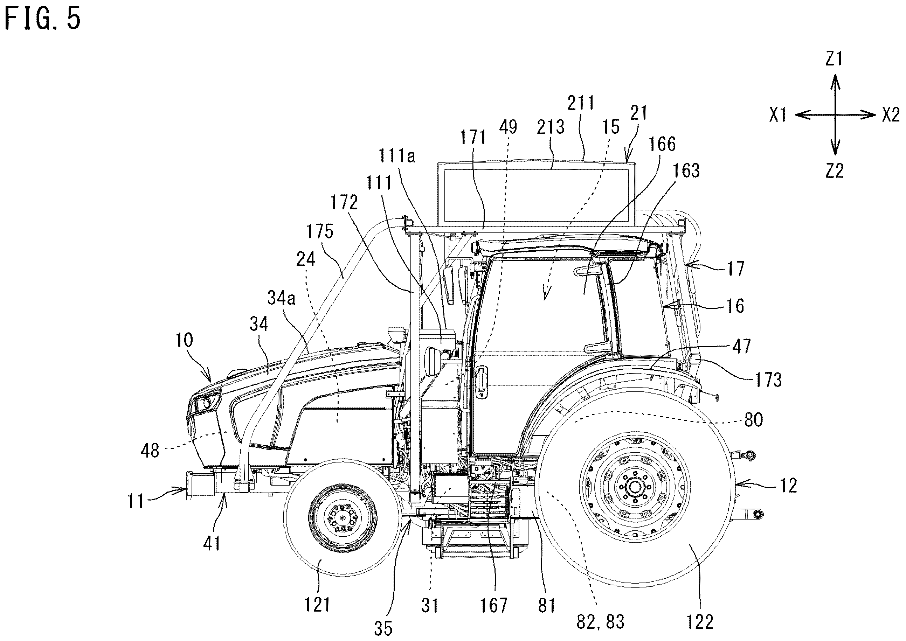

A step 167 is provided on one side (left side) of the cabin 16 in the vehicle-width direction (see FIG. 5). The step 167 is a member on which a worker who gets on and off the cabin 16 places his/her foot.

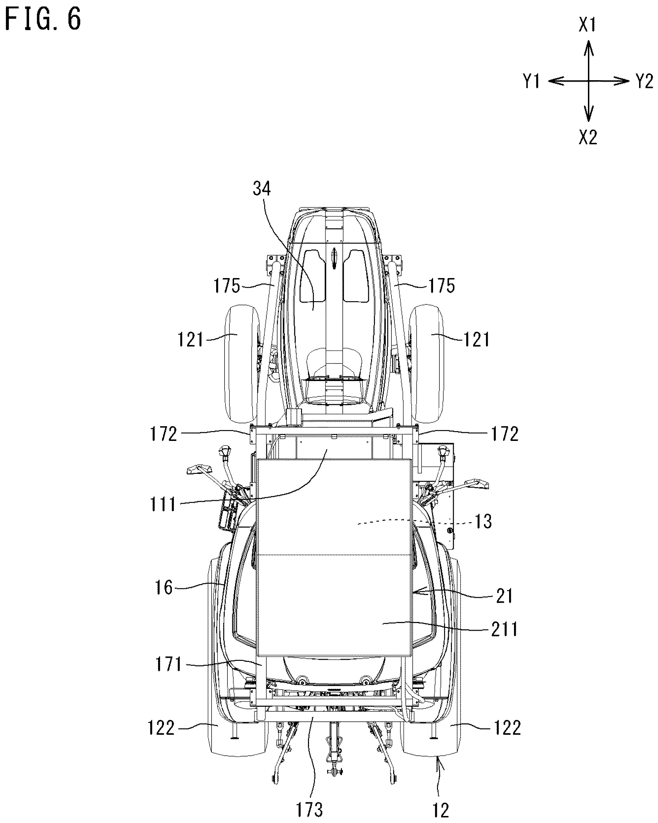

The cover 111 and the hood 34 are provided in front of the cabin 16. As illustrated in FIG. 2 and FIG. 6, the sizes of the cover 111 and the hood 34 in the vehicle-width direction are smaller than the sizes of the cabin 16 in the vehicle-width direction. The size of the hood 34 in the vehicle-width direction is smaller than the size of the cover 111 in the vehicle-width direction.

The work vehicle 10 of the present embodiment has the cabin 16, but does not necessarily have the cabin 16. The work vehicle 10 may have a canopy or a rollover protective structure (ROPS) instead of the cabin 16. When the work vehicle 10 does not have the cabin 16, the tank unit 21 is supported by the installation frame 17 and positioned above the driver's seat 15.

### [Traveling Device 12]

The traveling device 12 has the front wheels 121 and the rear wheels 122 (see FIG. 6). The front wheels 121 are provided on the left and right of the front portion of the vehicle body 11. The rear wheels 122 are provided on the left and right of the rear portion of the vehicle body 11. The maximum size of the left and right rear wheels 122 in the vehicle-width direction is larger than the maximum size of the left and right front wheels 121 in the vehicle-width direction. The maximum size of the left and right rear wheels 122 in the vehicle-width direction is the maximum vehicle width size of the work vehicle 10.

One or both of the front wheels 121 and the rear wheels 122 are rotated by the power of the motor 31. One or both of the front wheels 121 and the rear wheels 122 (drive wheels) rotated by the power of the motor 31 may be crawlers (endless track).

### [Drive Device 14]

As described above, the drive device 14 includes the fuel cell 24, the battery unit 30, and the motor 31.

The fuel cell 24 is positioned on the chassis 41 at a position close to the front of the vehicle body 11 (see FIG. 9). The motor 31 is positioned at the rear of the fuel cell 24 (see FIG. 8). The battery unit 30 is positioned close to the outside in the vehicle-width direction of the vehicle body 11 (see FIG. 1). The battery unit 30 is mounted on the chassis 41 by the support structure 37.

The fuel cell 24 generates electric power by hydrogen gas to obtain electric power for rotating the motor 31. The fuel cell 24 (see FIG. 9) includes a cell casing 241 having a substantially rectangular box shape, and a fuel cell stack 242 provided inside the cell casing 241. The fuel cell stack 242 includes a plurality of battery cells. The battery cells each have a positive electrode and a negative electrode. A plurality of single cells are in a stacked state. The electric power generated by the battery cells is aggregated and output to the battery unit 30.

The motor 31 includes a rotating rotor and a stator having a plurality of coils. An output shaft of the motor 31 is coupled to the power transmission mechanism 333 in the gear case 33 (see FIG. 8). The motor 31 is positioned at the rear of the fuel cell 24 and below the second radiator 49.

### [Tank Unit 21]

The tank unit 21 (see FIG. 9) includes the tanks 13 and the tank case 211 that houses the tanks 13. The tanks 13 are substantially cylindrical high-pressure containers. The tanks 13 are made of a fiber-reinforced resin or the like reinforced with carbon fibers or glass fibers. In the present embodiment, the three tanks 13 are fixed to the tank case 211 with the axial direction of the cylindrical portions parallel to the vehicle-width direction. The number of tanks 13 is not limited to 3.

The tank case 211 is a box capable of housing one or a plurality of tanks 13. The tank case 211 has a box shape that covers the entire tanks 13 to be housed. The tank case 211 has an openable/closable door 213 (see FIG. 1) on one or both sides in the vehicle-width direction, and is opened in the vehicle-width direction. The tank case 211 is placed above the roof 164 at a distance from the roof 164 in the vertical direction. The tank case 211 is fixed to the upper frame portion 171 of the installation frame 17. The tank case 211 is made of metal such as aluminum or steel, and protects the tank 13 against thermal and physical influences from the outside.

The tanks 13 are disposed above the cabin 16 (driver's seat 15). Therefore, a degree of freedom in arrangement of the fuel cell 24, the filling unit 25, the motor 31, and the battery unit 30 in the vehicle body 11 is high. Conversion of a conventional work vehicle using a conventional internal combustion engine into the work vehicle 10 including the fuel cell 24 and the motor 31 as in the present embodiment does not require significant change of the arrangement configuration of instruments.

The tank 13 is coupled to the rear pipe 22r and the front pipe 22f via a valve unit 212 (see FIG. 9). The rear pipe 22r (see FIG. 3) is a gas inlet pipe line connecting the filling port 26 for hydrogen gas and the valve unit 212, and guides hydrogen gas to be introduced into the filling port 26 to the tank 13. The front pipe 22f (see FIG. 2) is a gas outlet pipe line connecting the fuel cell 24 and the valve unit 212, and guides hydrogen gas stored in the tank 13 to the fuel cell 24. The tank 13 stores hydrogen gas introduced into the filling port 26 from the outside of the vehicle, and supplies the hydrogen gas to the fuel cell 24. The valve unit 212 includes an on-off valve, a pressure reducing valve, and the like to adjust the flow rate of the hydrogen gas stored in the tank 13 to a predetermined flow rate, and guides the hydrogen gas to the fuel cell 24 through the front pipe 22f.

### [Installation Frame 17]

The installation frame 17 (see FIG. 1) is a frame structure for installing the tank 13 on the vehicle body 11. The installation frame 17 of the present embodiment includes an upper frame portion 171 that supports the tank 13, and a first front frame portion 172, a second front frame portion 175, and a rear frame portion 173 as frames for supporting the upper frame portion 171. The tank case 211 is mounted on the upper frame portion 171. That is, the upper frame portion 171 supports the tank 13 via the tank case 211. A specific configuration of the installation frame 17 will be described below.

On the rear frame portion 173, the filling unit 25 is provided (see FIG. 3). The filling unit 25 has the filling port 26 to which a gas filling nozzle of a hydrogen gas supply machine (not illustrated) placed outside the vehicle is connected when the tank 13 is filled with hydrogen gas.

### [Radiator]

The work vehicle 10 (see FIG. 4 and FIG. 5) includes a cooling system that cools the fuel cell 24, the motor 31, a step-up circuit 80, an inverter 81, DC/DC converters 82 and 83, and the like with coolant. As a part of the cooling system, the work vehicle 10 includes the first radiator 48 and the second radiator 49. As illustrated in FIG. 9, the first radiator 48 is positioned in front of the fuel cell 24, and the second radiator 49 is positioned at the rear of the fuel cell 24.

The first radiator 48 is a radiator for cooling instruments other than the fuel cell 24. The second radiator 49 is a radiator for cooling the fuel cell 24.

The first radiator 48 is connected, via a first cooling flow channel (not illustrated) including a circulation pump, to electrical components (heat generating components) that require cooling of the motor 31, the step-up circuit 80, the inverter 81, and the DC/DC converters 82 and 83. The first radiator 48 cools the coolant that is supplied through the first cooling flow channel by heat exchange with the external air.

The second radiator 49 is connected to the fuel cell 24 via a second cooling flow channel (not illustrated) having a circulation pump. The second radiator 49 cools the coolant supplied through the second cooling flow channel by heat exchange with the external air.

The first radiator 48 includes a first fan 481. The second radiator 49 includes a second fan 491. The first fan 481 and the second fan 491 rotate to cause air to pass through the first radiator 48 and the second radiator 49, thereby promoting heat exchange with the coolant.

### [Battery Unit 30]

The battery unit 30 stores electric power to be supplied to the motor 31. The battery unit 30 (see FIG. 9) includes a battery (battery pack) 300 and a housing 307 that houses the battery 300. The battery 300 temporarily stores electric power generated by the fuel cell 24, and outputs the stored electric power to an electric device such as the motor 31. The battery 300 includes a plurality of battery cells. The battery 300 is a charge/discharge secondary battery such as a lithium ion battery or a lead storage battery.

### [Electrical System]

The work vehicle 10 includes a junction box 75. The junction box 75 is an electrical connection box for relay connection and distribution of electric power output from the battery unit 30.

The fuel cell 24 is connected to the inverter 81 (see FIG. 5) via a step-up circuit. The battery unit 30 is connected to the inverter 81 through the junction box 75. The inverter 81 is electrically connected to the motor 31. The inverter 81 converts DC power output from the step-up circuit into three-phase AC power and outputs the three-phase AC power to the motor 31.

The work vehicle 10 includes low-voltage electrical components that operate at a voltage lower than that of the motor 31. Electric power stepped down by a step-down circuit is supplied to the low-voltage electrical components through the junction box 75. The work vehicle 10 of the present embodiment includes the battery unit 30, the radiators 48 and 49, and an air conditioner 74 as the low-voltage electrical components. The work vehicle 10 includes the first DC/DC converter 82 and the second DC/DC converter 83 as the step-down circuit.

### [Motor Arrangement]

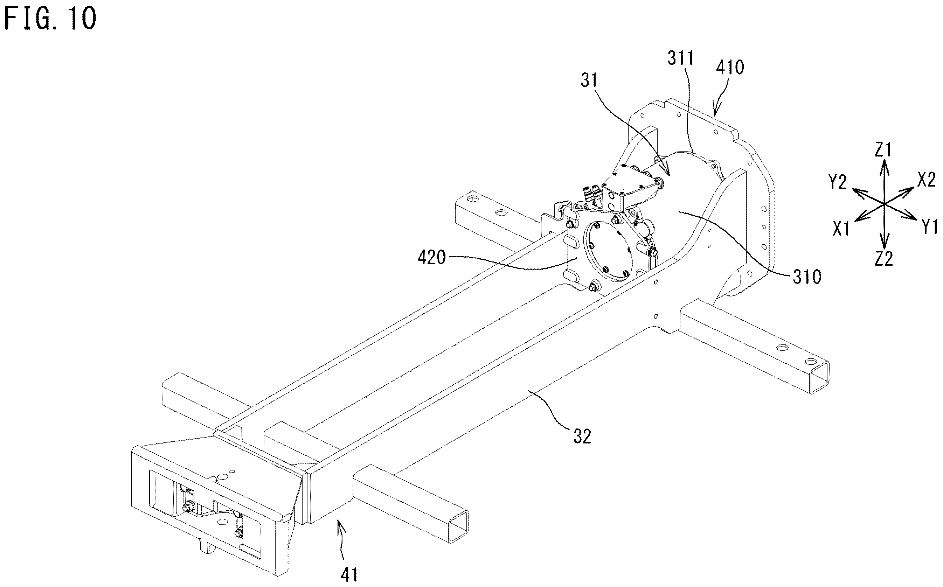

FIG. 10 is a perspective view illustrating an installed state of the motor on the chassis. As illustrated in FIG. 10, in the work vehicle 10 of the present disclosure, the front frame 32 which is a part of the chassis 41 includes a plate 410 for fixing the rear side surface of the motor 31 at the rear end thereof. The front frame 32 includes an intermediate plate 420 for fixing a front side surface of the motor 31 at an intermediate portion of the front frame 32. In the work vehicle 10, the motor 31 is disposed between the plate 410 and the intermediate plate 420. The motor 31 is installed on the front frame 32 with the front side surface fixed to the intermediate plate 420 and the front side surface fixed to the plate 410.

### [Fixing State of Motor]

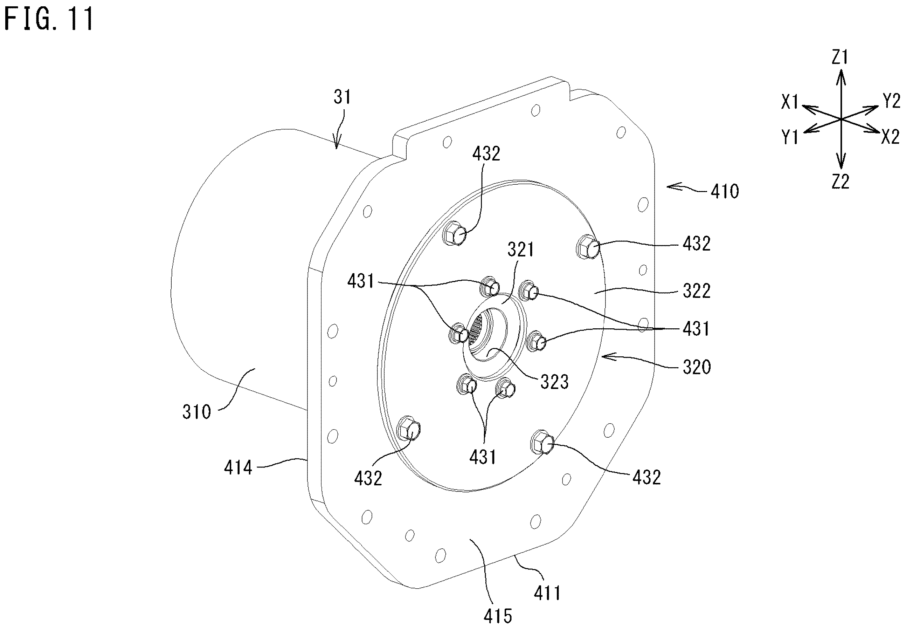

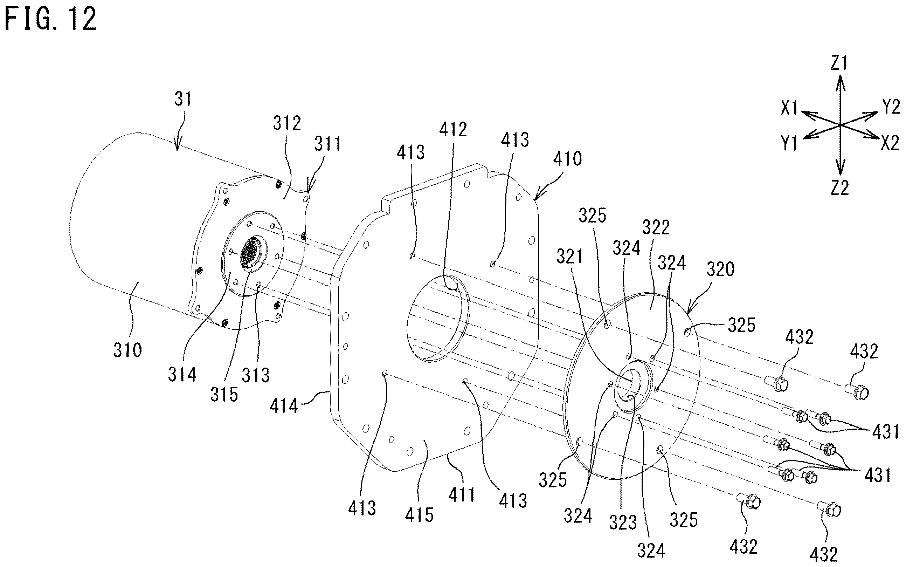

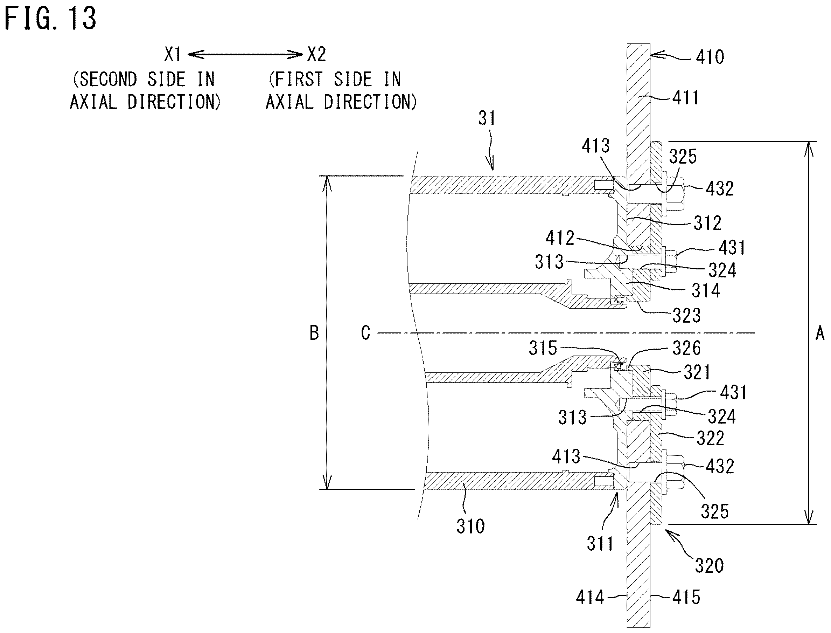

FIG. 11 is an overall perspective view illustrating a state in which the motor is fixed to the plate. FIG. 12 is an exploded perspective view illustrating a state in which the motor is fixed to the plate. FIG. 13 is a cross-sectional view illustrating a state in which the motor is fixed to the plate. As illustrated in FIG. 11 to FIG. 13, in the work vehicle 10 of the present disclosure, the motor 31 is fixed to the plate 410 via an extension member 320. In the following description, the center of the rotation shaft of the motor 31 is also referred to as a central axis C (see FIG. 13). In the following description, with reference to the direction of the central axis C of the motor 31, the rear side (the direction of the arrow X2) of the work vehicle 10 is also referred to as a first side in the axial direction, and the front side (the direction of the arrow X1) of the work vehicle 10 is also referred to as a second side in the axial direction. In the following description, a direction orthogonal to the central axis C is also referred to as a radial direction.

### [Motor]

As illustrated in FIG. 12, the motor 31 includes a cylindrical case 310 and an annular flange 311 fixed to the end of the case 310 on the first side in the axial direction. The flange 311 includes a mounting surface 312 that is in contact with the plate 410 and a protruding portion 314 that protrudes from the radially inner side of the mounting surface 312 to the first side in the axial direction. The flange 311 further has a shaft hole 315 formed on the radially inner side of the protruding portion 314. The shaft hole 315 is coaxial with the central axis C, and a shaft (not illustrated) for transmitting the output of the motor 31 to the power transmission mechanism 333 passes through the shaft hole. The motor 31 has a plurality of (in the present embodiment, six) bolt holes 313 for fixing the extension member 320 (specifically, a boss portion 321) in the protruding portion 314. The bolt holes 313 have a female screw to which first bolts 431 are screwed.

### [Plate]

As illustrated in FIG. 12, the plate 410 includes an annular plate body 411. The plate body 411 has a through hole 412 formed on the radially inner side. The plate 410 is disposed on the first side of the flange 311 in the axial direction. The through hole 412 is formed coaxially with the central axis C, and a shaft (not illustrated) for transmitting the output of the motor 31 to the power transmission mechanism 333 passes through the through hole 412. The plate 410 is disposed adjacent to the first side of the motor 31 in the axial direction in a state where the protruding portion 314 is inserted into the through hole 412 and the side surface 414 of the plate body 411 on the second side in the axial direction is in contact with the mounting surface 312. The plate 410 has a plurality of (in the present embodiment, four) bolt holes 413 for fixing the extension member 320. The bolt holes 413 have a female screw to which second bolts 432 are screwed.

### [Extension Member]

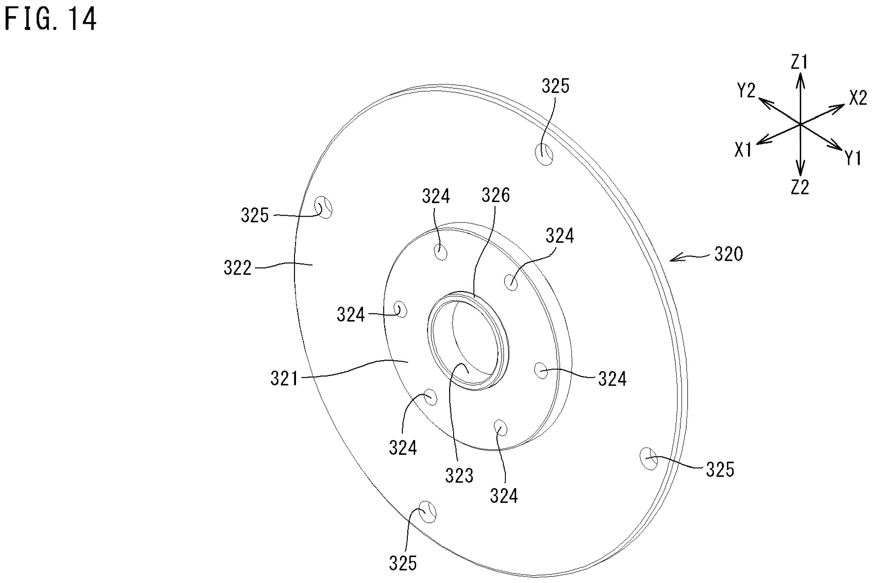

FIG. 14 is a perspective view illustrating the extension member as viewed from the boss portion side. As illustrated in FIG. 12 and FIG. 14, the extension member 320 includes a boss portion 321 having a cylindrical shape, and a flange portion 322 extending radially outward from an end of the boss portion 321. In the extension member 320 of the present embodiment, the boss portion 321 and the flange portion 322 are formed separately, but the boss portion 321 and the flange portion 322 may be integrally formed.

In the work vehicle 10, the extension member 320 is used in an orientation in which the boss portion 321 faces the second side in the axial direction and the flange portion 322 faces the first side in the axial direction. The extension member 320 has a through hole 323 formed on the radially inner side of the boss portion 321 and the flange portion 322. The extension member 320 is disposed with the flange portion 322 in contact with the first side of the plate 410 in the axial direction in a state where the boss portion 321 is inserted into the through hole 412 and the front end surface of the boss portion 321 is in contact with the protruding portion 314. The extension member 320 includes a plurality of (in the present embodiment, six) first bolt holes 324 for fixing the boss portion 321 to the flange 311. The first bolt holes 324 are holes penetrating the boss portion 321 and the flange portion 322 in the axial direction, and the first bolts 431 are inserted through the first bolt holes 324. The extension member 320 has a plurality of (in the present embodiment, four) second bolt holes 325 for fixing the flange portion 322 to the plate 410. The second bolt holes 325 are holes penetrating the flange portion 322 in the axial direction, and the second bolts 432 are inserted through the second bolt holes 325.

In the extension member 320, the plurality of first bolt holes 324 are formed at positions radially inner than the plurality of second bolt holes 325. Since the boss portion 321 is fixed to the motor 31 (flange 311) at a position closer to the central axis C of the motor 31, axial displacement between the extension member 320 and the motor 31 can be suppressed. The work vehicle 10 having such a configuration can suppress axial displacement of the motor 31 and the extension member 320, and thus, can suppress distortion generated in the motor 31 fixed to the plate 410.

The outer diameter of the boss portion 321 is substantially the same as the inner diameter of the through hole 412 and the outer diameter of the protruding portion 314. In the work vehicle 10 of the present disclosure, an outer diameter A of the flange portion 322 is larger than an outer diameter B of the flange 311 (see FIG. 13). The extension member 320 is fixed to the plate 410 (plate body 411) with the flange portion 322 at a position away from the central axis C of the motor 31, so that a contact area between the flange portion 322 and the plate 410 can be increased, whereby the axial displacement between the extension member 320 and the plate 410 can be suppressed. The work vehicle 10 of the present disclosure having such a configuration can suppress axial displacement of the plate 410 and the extension member 320, and thus, can suppress distortion generated in the motor 31 fixed to the plate 410.

As illustrated in FIG. 14, the extension member 320 further includes an annular protrusion 326 at the end of the boss portion 321 on the second side in the axial direction. The protrusion 326 is inserted into the shaft hole 315 of the flange 311. The extension member 320 is more accurately positioned with respect to the motor 31 in the radial direction by inserting the protrusion 326 into the shaft hole 315.

### [Fixing Status of Motor using Extension Member]

As illustrated in FIG. 11 to FIG. 13, the boss portion 321 of the extension member 320 is fixed to the protruding portion 314 of the flange 311 by screwing, to the bolt holes 313, the first bolts 431 inserted into the first bolt holes 324 from the first side in the axial direction. The flange portion 322 of the extension member 320 is fixed to the plate 410 (plate body 411) by screwing, to the bolt holes 413, the second bolts 432 inserted into the second bolt holes 325 from the first side in the axial direction. In other words, the boss portion 321 is fixed to the flange 311 (protruding portion 314) by the first bolts 431 inserted into the through hole 412 formed in the plate 410 from the first side in the axial direction and fastened to the flange 311 from the first side in the axial direction. The flange portion 322 is disposed on the first side of the plate 410 in the axial direction, and is fixed to the plate 410 by the second bolts 432 fastened to the plate 410 from the first side in the axial direction.

In the work vehicle 10 of the present disclosure, the flange 311 has the annular protruding portion 314 that protrudes from the radially inner side to the first side in the axial direction, and the boss portion 321 is fixed to the protruding portion 314 inserted into the through hole 412 from the second side in the axial direction. The extension member 320 is fixed to the end surface of the protruding portion 314 on the first side in the axial direction and a side surface 415 of the plate 410 on the first side in the axial direction. Such a configuration enables suppression of a force generated when the motor 31 is fixed to the plate 410, specifically, a force that pulls the flange 311 in the axial direction. As a result, distortion generated in the motor 31 fixed to the plate 410 can be suppressed.

Since the plate 410 is a part of the chassis 41 and is a relatively large component, it is difficult to perform a process of removing welding distortion or the like on the side surface 414 and 415 of the plate 410 with high accuracy. Direct fixing of the flange 311 to the side surface 414 as described above generates distortion in the flange 311 due to the influence of distortion of the side surface 414. The extension member 320 is a component smaller than the plate 410, so that a process of removing distortion or the like can be easily performed with high accuracy, and the flatness of the end surface can be easily ensured. Therefore, connection of the flange 311 and the plate 410 via the extension member 320 can prevent the influence of the distortion of the plate 410 from affecting the flange 311, and thus, can suppress the distortion generated in the flange 311 when the motor 31 is fixed to the plate 410.

### [Spigot Joint Structure]

The flange 311 and the plate 410 form a spigot joint structure by inserting the protruding portion 314 into the through hole 412. The "spigot joint structure" referred to herein is a structure in which a recess portion formed in one component and a protruding portion formed in the other component are fitted to each other, whereby the components can be firmly combined while being positioned. In the work vehicle 10 of the present disclosure, the boss portion 321 is connected to the protruding portion 314, and thus the same effect as that of extending the protruding portion 314 to the first side in the axial direction can be obtained. In the work vehicle 10 of the present disclosure, the extension member 320 is used, so that the motor 31, the extension member 320, and the plate 410 can form the spigot joint structure, whereby the axial displacement of the motor 31 and the plate 410 can be reliably suppressed, and the positioning accuracy of the motor 31 and the plate 410 can be further enhanced. Further, in the work vehicle 10 of the present disclosure, the "spigot joint structure" formed by the through hole 412 and the protruding portion 314 can be extended in the axial direction by the extension member 320. For example, direct fixing of the motor and the plate requires positioning of relatively large components, and thus mounting the motor to the plate takes labor. In the work vehicle 10 of the present disclosure, the motor 31 and the plate 410 can be coupled while adjusting the position of the extension member 320 that is relatively small, without the need to adjust the positions of the motor 31 and the plate 410. Therefore, the work vehicle 10 of the present disclosure can facilitate the work of mounting the motor 31 on the plate 410 by axially extending the "spigot joint structure" formed by the through hole 412 and the protruding portion 314, using the extension member 320.

The motor 31 described in the present embodiment employs a water-cooling cooling system in which a flow channel is formed inside the wall of the case 310 (jacket). In the motor 31, distortion generated in the flange 311 when the motor 31 is fixed to the plate 410 generates a gap between the case 310 and the flange 311, and the fluid passing through the jacket may leak through the gap. In the work vehicle 10 of the present disclosure, the motor 31 is fixed to the plate 410 via the extension member 320, so that distortion generated in the flange 311 can be suppressed, and then leakage of fluid passing through the jacket can be suppressed.

The embodiment described above is merely an example in all respects and the invention is not limited to the embodiment. The scope of the present invention is defined by the claims rather than the embodiment, and includes all modifications within the scope equivalent to the configurations defined in the claims.

### REFERENCE SIGNS LIST

- 10: work vehicle
- 11: vehicle body
- 13: tank (hydrogen tank)
- 22: pipe (hydrogen pipe)
- 24: fuel cell (fuel cell module)
- 31: motor (electric motor)
- 311: flange
- 314: protruding portion
- 320: extension member
- 321: boss portion
- 322: flange portion
- 324: first bolt hole
- 325: second bolt hole
- 410: plate
- 412: through hole
- 431: first bolt
- 432: second bolt
- A: outer diameter size (of flange portion)
- B: outer diameter size (of flange)

## Claims

1. A work vehicle comprising:
an electric motor including an annular flange on a side surface on a first side in an axial direction; and
a vehicle body including an annular plate to which the electric motor is fixed,
wherein
the work vehicle further comprises an extension member that connects the flange and the plate,
the extension member includes:
a cylindrical boss portion; and
a flange portion extending radially outward from an axial end of the boss portion,
the plate is disposed on a first side of the flange in the axial direction,
the boss portion is fixed to the flange by a first bolt inserted into a through hole formed in the plate from a first side in the axial direction and fastened to the flange from the first side in the axial direction, and
the flange portion is fixed to the plate by a second bolt disposed on the first side of the plate in the axial direction and fastened to the plate from the first side in the axial direction.

2. The work vehicle according to claim 1, wherein
the flange includes an annular protruding portion protruding from a radially inner side to a first side in the axial direction, and
the boss portion is fixed to the protruding portion inserted into the through hole from a second side in the axial direction.

3. The work vehicle according to claim 1 or 2, wherein
the extension member includes:
a first bolt hole through which the first bolt is inserted; and
a second bolt hole through which the second bolt is inserted, and
the first bolt hole is formed at a position radially inner than the second bolt hole.

4. The work vehicle according to claim 1 or 2, wherein
in the extension member,
an outer diameter of the flange portion is larger than an outer diameter of the flange.

5. The work vehicle according to claim 1 or 2, further comprising:
a fuel cell module installed on the vehicle body; and
a hydrogen pipe and a hydrogen tank that supply hydrogen to the fuel cell module.
